# EUROPEAN PATENT SPECIFICATION

(11) **EP 0 439 610 B1**
(45) Date of publication and mention of the grant of the patent: **15.06.1994**
(21) Application number: 89911396.3
(22) Date of filing: 13.10.1989
(51) Int. Cl.: B01D 21/00, C02F 3/20, C02F 3/12

(54) **GAS-CONTAINING SETTLING TANK**
GAS-ENTHALTENDER BEHÄLTER FÜR DIE FÄLLUNG
RESERVOIR DE PRECIPITATION CONTENANT DU GAZ

(30) Priority: 14.10.1988 JP 258977/88
(43) Date of publication of application: 07.08.1991
(73) Proprietor: Yuugen Kaisha PARASIGHT, Chiba 280 (JP)
(72) Inventor: NOJIMA, Youko, Chiba-shi, Chiba 280 (JP); NOJIMA, Hisatake, Chiba-shi, Chiba 280 (JP)
(74) Representative: Goddar, Heinz J., Dr.
(86) International application number: PCT/JP89/01054
(87) International publication number: WO 90/04444

(56) References cited:
- JP-A- 6 328 499
- JP-A-60 118 292
- JP-B- 4 426 634
- JP-Y- 4 815 971

## Description

The invention relates to a gas containing settling tank with the features of claim 1.

JP-A-44-26634 discloses a gas containing settling tank with horizontally extending inverted vessels suitable to vertically store gas fed into water in the tank. Said stored gas is diffused from tiny air vents around the vessels and therefore no pumping force in the space between the vessels takes place.

JP-A-36-15013 discloses an apparatus in which liquid is introduced at the top and gas is introduced at the bottom. But no gas is accumulated as a gas phase beneath the horizontal partition plate of each chamber of the apparatus, although downwardly extending hollow tubes are provided. This is due to the fact, that the partition plates as well as the hollow tubes contain many small openings.

JP-A-60-118292 discloses an apparatus in which sewage treatment is performed by using only one layer of gas phase in water and regulating water with a pump.

It is the object of the invention to provide a gas containing settling tank with better aerobic conditions.

According to the invention, this object is solved by the features of claim 1. Subject matter of claims 2 and 3 are preferred embodiments of the invention.

When the invention is put in operation in the tank, the following occurs. The respective containers of the container group are fixed upside down at the fixed intervals within the tank and, when ventilating the lowermost container, a fixed quantity of the gas is held therein for the height of the hollow projection. The gas more than the fixed quantity ascends through the hollow projection, which is in communication with the vent port, to be held in the upper containers again. This means that, when continuously ventilating the lowermost container, all the upper containers can be ventilated in order through the hollow projections thereof. It should particularly be noted that the ascent at this time is not such that the gas of a quantity overflowing the lower container ascends continuously little by little into the upper container but such that the gas over the fixed quantity is once accumulated and, then, intermittently ascends with force through the pipe. This is the phenomenon that the gas ascends after increasing over the height of the pipe due to the effect of surface tension of water. The above implies that the levels of the artificial water surface made in the containers vary up and down in accordance with the ventilation, and that partial flows of water surely occur in the containers. In the other words, this means as if a small pump is provided between adjacent upper and lower containers. As concerns the water between them, when making air pass therethrough, it is possible to let oxygen dissolve and remove carbonic acid gas. A pumping force acting in a horizontal direction, in the water within the tank, brings about a horizontal stirring effect and contributes to the transfer of the water all over the region of the tank, which water is completed with gas exchange between carbonic acid gas and oxygen. Further, a matter of importance in the invention is that, since a stirring force in a vertical direction is hard to he caused, settlement easily occurs in the tank while maintaining an aerobic condition therein.

To describe the invention in more detail, description will be made thereon in accordance with the accompanying drawings.

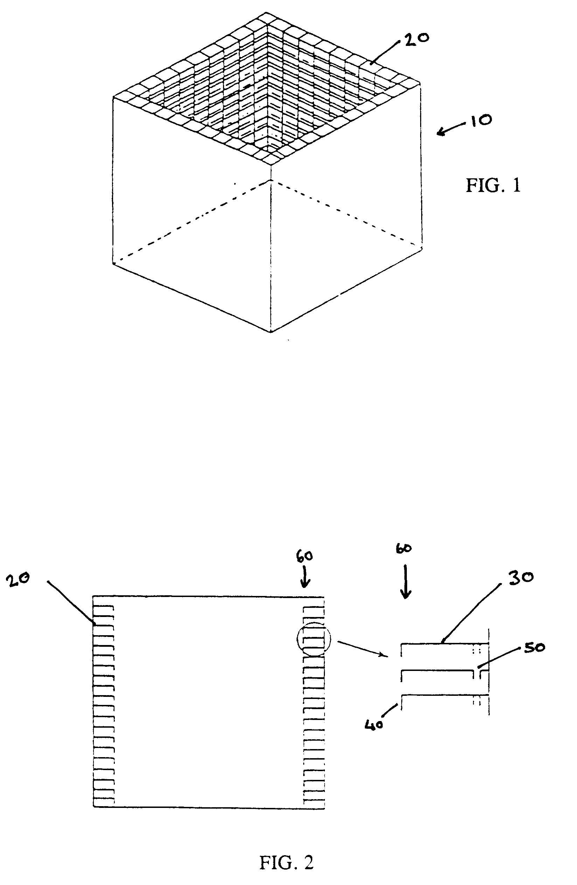

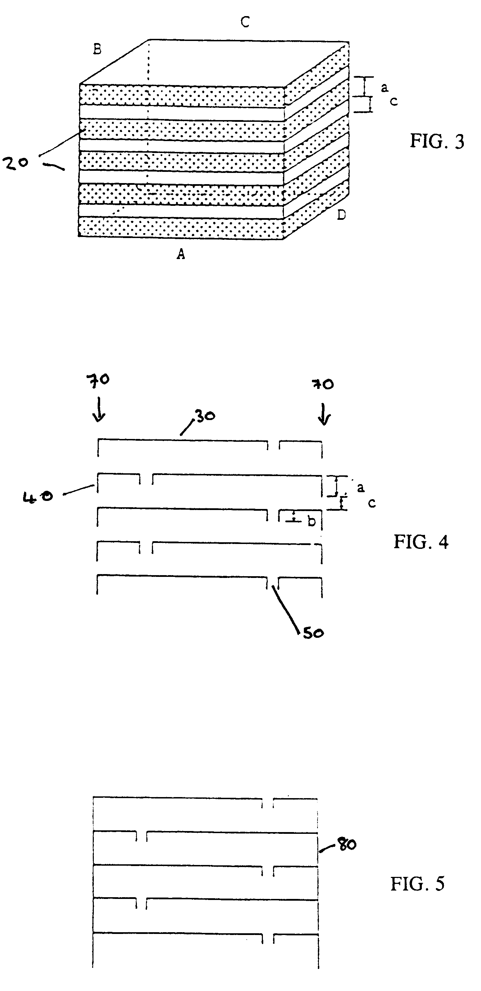

Fig. 1 is a perspective view showing the external appearance of a tank 10 according to an embodiment of the invention. In the tank, a group of containers 20 are fixed to inner side walls of the tank. The fixation of the container group may be made at any portion of the tank. Fig. 2 is a cross sectional view taken at the center of Fig. 1. Fig. 3 is a perspective view of an assembly in which used are containers of the same size and the five containers are fixed upside down in parallel to one another at their four corners. Fig. 4 is a cross sectional view taken at the center of Fig. 3. There are provided hollow projections in a staggered relation to one another, which are vent ports.

In Figs. 3 and 4, a, b and c represent the height of a side wall 40 of the container, the height of the hollow projection (being in communication with the vent port 50), and an interval between adjacent upper and lower containers, respectively. The apparatus of the invention wherein a is set to 1.5 cm, b to 0.5 cm and c to 1.0 cm is recommendable.

Fig. 5 is a cross sectional view in the case where partitions are provided in the intervals between adjacent upper and lower containers in Fig. 3, or in spaces for allowing water to come in and out, to block part of the intervals so that communication of spaces on both sides of the containers are broken to limit the spaces through which water comes in and out.

A direction or directions in which the small pumping effect or operation between the respective containers acts, when all outsides (B, C and D) except one outside A in Fig. 3 are respectively formed in single continuous faces, or when partitions 80 are provided to block the spaces between adjacent upper and lower containers, become such as shown in the cross sectional view of Fig. 5. When continuously ventilating, water comes in and out through the front face (the outside A) only. The pumping forces concentrate at the front face (the outside A) and the direction of flow of water is fixed to be controlled with easy. The assembly shown in Fig. 5 is used as a container group which is provided inside the tank shown in Fig. 1.

When considering the environment in the containers of the invention, there is a biological feature that a countless number of plates are just under the surface of water. Life, ranging from large metazoans to microorganisms, tends to become active in fission and movement when lying on the ground. Usually, however, oxygen in water is used up in a short period of time and, therefore, it is impossible for the life to keep lying on the ground. In this case, if there is always plenty of oxygen just under the surface of water, it is most convenient for the existence and propagation of the life. This is just the same condition as the environment of the seashore where the life was born. Also from this point of view, it is suggested that the invention is effective for the culture of microorganisms.

When sewage treatment, with the tank of the invention, it is possible to perform a biological oxidation treatment in an aerobic manner through the process of settling. Breeding fishes and shells can be done at the center of the tank of the invention in three-dimensional manner. In this case, there is an advantage that remains of feed and excreta naturally settle. The invention is usable for the culture of a great number of microorganisms.

## Claims

1. A settling tank, suitable to perform settlement in an aerobic manner, comprising a tank (10) having flat tank side walls, a plurality of containers (20) fixed to the inside of at least one of said tank side walls at fixed vertical intervals, parallel to each other, for holding a predetermined quantity of gas under water, each of said containers comprising a flat horizontal wall (30) extending inwardly of said tank to an inner edge (60), whereby the distance extended by the flat horizontal wall is small in comparison with the width of the tank, such that the inner edges (60) of the containers (20) define at least part of a central vertical through-passage in said tank, each of said containers further comprising a downwardly depending wall (40) extending a vertical height (a) downwardly from the inner edge (60) of said flat horizontal wall (30), said vertical height (a) being less than the complete vertical interval between adjacent containers, each of said containers further comprising a vent port opening (50) in said flat horizontal wall with a vent pipe of vertical length (b) extending downwardly from said vent port, said vertical length (b) being less than said vertical height (a).

2. A settling tank according to claim 1, characterized in that the vent port and pipe of a container are offset relative to the vent pipe and port of the containers immediately above and below said container, such that a staggered arrangement of vent pipes and ports is achieved.

3. A settling tank according to claim 1 or 2 characterized in that at least some of said flat horizontal walls further comprise side edges (70) from which downwardly depend walls (40) of vertical height (a).

4. A settling tank according to claim 1 or 2 characterized in that at least some of said flat horizontal walls further comprise side edges from which downwardly depend walls extending to and being connected to the flat horizontal wall of an underlying container providing partitions (80) to limit the entrance and exit of water with respect to said flat containers.

## Patentansprüche

1. Ein Absetztank, der geeignet ist für das Absetzen in einer aerobischen Weise, mit einem Tank (10), der flache Tankseitenwandungen hat, wobei eine Mehrzahl von Behältern (20) in der Innenseite wenigstens einer der Tankseitenwandungen unter festen, vertikalen Intervallen parallel zueinander befestigt ist, um eine vorgegebene Menge von Gas unter Wasser zu halten, wobei jeder der Behälter eine flache, horizontale Wandung (30) aufweist, die sich in das Innere des Tankes zu einem inneren Rand (60) erstreckt, wodurch der Abstand, der durch die flache, horizontale Wandung erstreckt ist, klein gegenüber der Breite des Tanks ist, derart, daß die inneren Ränder (60) der Behälter (20) wenigstens einen Teil einer zentralen, vertikalen Durchlaßpassage in dem Tank definieren, jeder der Behälter weiter eine nach unten herabhängende Wandung (40) aufweist, die sich um eine vertikale Höhe (a) von dem inneren Rand (60) der flachen, horizontalen Wandung (30) nach unten erstreckt, wobei die vertikale Höhe (a) kleiner ist als das vollständige, vertikale Intervall zwischen benachbarten Behältern, jeder der Behälter weiter eine Entlüftungsanschlußöffnung (50) in der horizontalen Wandung mit einem Entlüftungsrohr einer vertikalen Länge (b), die sich nach unten von dem Entlüftungsanschluß erstreckt, aufweist, wobei die vertikale Länge (b) kleiner als die vertikale Höhe (a) ist.

2. Ein Absetztank nach Anspruch 1, dadurch gekennzeichnet, daß der Entlüftungsanschluß und das Rohr eines Behälters relativ zu dem Entlüftungsrohr und dem Anschluß des Behälters direkt oberhalb und unterhalb des Behälters versetzt sind, so daß eine versetzte Anordnung von Entlüftungsrohren und Anschlüssen erreicht wird.

3. Ein Absetztank nach Anspruch 1 oder 2, dadurch gekennzeichnet, daß wenigstens einige der flachen, horizontalen Wandungen weiter Seitenränder (70) aufweisen, von denen Wandungen (40) der vertikalen Höhe (a) herabhängen.

4. Ein Absetztank nach Anspruch 1 oder 2, dadurch gekennzeichnet, daß wenigstens einige der flachen, horizontalen Wandungen weiter Seitenränder aufweisen, von denen Wandungen nach unten herabhängen, die sich zu der flachen, horizontalen Wandung eines darunterliegenden Behälters erstrecken und mit dieser verbunden sind, der Trennwandungen (80) aufweist, um das Eintreten und das Austreten von Wasser bezüglich der flachen Behälter begrenzen.

## Revendications

1. Réservoir de décantation, convenant pour effectuer la décantation en aérobiose, comprenant un réservoir (10) à parois latérales plates, une pluralité de récipients (20) fixés à l'intérieur d'au moins une desdites parois latérales de réservoir à des intervalles verticaux fixés, parallèles entre eux, pour contenir une quantité prédéterminée de gaz sous l'eau, chacun desdits récipients comprenant une paroi horizontale (30) plate s'étendant vers l'intérieur dudit réservoir, sur un bord intérieur (60), de manière que la distance sur laquelle s'étend la paroi horizontale plate soit petite devant la largeur du réservoir, de façon que les bords intérieurs (60) des récipients (20) définissent au moins une partie d'un passage central traversant vertical dans ledit réservoir, chacun desdits récipients comprenant en outre une paroi descendante (40), s'étendant sur une hauteur verticale (a) vers le bas, depuis le bord intérieur (60) de ladite paroi horizontale plate (30), ladite hauteur verticale (a) étant inférieure à l'intervalle vertical total entre des récipients adjacents, chacun desdits récipients comprenant en outre une ouverture d'évent (50) ménagée dans ladite paroi horizontale plate, avec un tube d'évent ayant une longueur verticale (b) s'étendant vers le bas depuis ledit orifice d'évent, ladite longueur verticale (b) étant inférieure à ladite hauteur verticale (a).

2. Réservoir de décantation selon la revendication 1, caractérisé en ce que l'orifice et le tube d'évent d'un récipient sont décalés par rapport au tube et à l'orifice d'évent des récipients situés immédiatement au-dessus et en dessous dudit récipient, de manière à obtenir un agencement décalé des tubes et des orifices d'évent.

3. Réservoir de décantation selon la revendication 1 ou 2, caractérisé en ce qu'au moins certaines des parois horizontales plates comprennent en outre des bords latéraux (70) d'où pendent des parois (40) d'une hauteur verticale (a).

4. Réservoir de décantation selon la revendication 1 ou 2, caractérisé en ce qu'au moins certaines desdites parois horizontales plates comprennent en outre des bords latéraux, d'où pendent des parois s'étendant vers, et étant reliées à, la paroi horizontale plate d'un récipient sous-jacent en constituant des cloisons (80) destinées à limiter l'entrée et la sortie de l'eau par rapport auxdits récipients plats.
